# EUROPÄISCHE PATENTSCHRIFT

(11) **EP 1 964 660 B1**
(45) Veröffentlichungstag und Bekanntmachung des Hinweises auf die Patenterteilung: **25.06.2014**
(21) Anmeldenummer: 08001036.6
(22) Anmeldetag: 21.01.2008
(51) Int. Cl.: B29C 49/48, B29C 49/06

(54) **Ring für Blasform mit Abstandhaltemittel für den Rohling, und Verfahren**
Ring for blow mould with preform centering means and method
Anneau pour moule de soufflage avec dispositif de centrage pour la préforme

(30) Priorität: 27.02.2007 DE 202007002873 U
(43) Veröffentlichungstag der Anmeldung: 03.09.2008
(73) Patentinhaber: Krones AG, 93073 Neutraubling (DE)
(72) Erfinder: Lappe, Ulrich, 93073 Neutraubling (DE); Asbrand, Helmut, D-93104 Sünching (DE)
(74) Vertreter: Bittner, Bernhard

(56) Entgegenhaltungen:
- EP-A- 1 188 543
- WO-A-01/85435
- WO-A-97/07965
- WO-A-2005/025835
- WO-A-2005/042231
- JP-A- H11 320 665
- US-B1- 6 179 143

## Beschreibung

Insbesondere im Bereich der Getränkeindustrie werden bereits seit längerer Zeit neben Glasflaschen auch Kunststoffflaschen für die abzufüllenden Getränke verwendet. Bei der Herstellung dieser Kunststoffflaschen ist es bekannt, einen Kunststoffrohling zu erwärmen, in eine Blasform zu geben und dann auf seine Endgröße aufzublasen. Dazu werden üblicherweise Blasformen verwendet, die umfänglich um den aufzublasenden Rohling geschlossen und dann durch ihre Öffnung mit Druckluft beschickt werden.

Beispiele von Blasformen und von Herstellungsverfahren werden in JP H 113 20 665, US 6 179 143, WO 9 707 965, WO 2005 025 835, WO 2005 042 231, EP 1 188 543, WO 0 185 435, US 2004 0 202 746 und EP 1 314 535 offenbart.

Dabei ist das Mundstück der zukünftigen Flasche bereits bei dem Rohling fertig gestellt und wird nicht weiter bearbeitet. Für den eigentlichen Blasvorgang liegt ein Umfangsrand oder Kragen des Rohlings auf einem Umfangsrand der Blasform auf, so dass verhindert wird, dass der Rohling in das Innere der Blasform fällt.

Mit anderen Worten liegt, sobald die Blasform geschlossen ist, der Rohling, d. h. die so genannte Preform, direkt vor dem Streckblasvorgang auf einer Ebene der Blasform bzw. einem Ring, welcher auch als Neckplatte bezeichnet wird, auf.

Dabei wird üblicherweise zum Eingeben des Rohlings in die Blasform ein federgespannter Greifer verwendet. Im Anschluss daran wird die Form verschlossen und anschließend der federgespannte Greifer angezogen. In diesem Herstellungsstadium kann es dazu kommen, dass die Preform in der Blasform geringfügig kippt, da zwischen der Preform und der Blasform an dieser Stelle ein Formspalt eingehalten werden muss. Dieser Formspalt ist nötig, um ein sauberes Schließen der Blasform sicherzustellen. Dieser Spalt zwischen der Preform und der Blasform ist üblicherweise zwischen 0,25 und 0,4 mm groß.

Insbesondere bei größeren Formspalten kann es dazu kommen, dass bei dem erwähnten leichten Kippen der Preform beim Abziehen des Greifers ein einseitiger Kontakt mit der Innenwand der Blasform zustande kommt. An dieser Kontaktstelle kühlt der heiße Preform etwas ab, was zur Folge haben kann, dass die Flasche nach dem Streckblasvorgang eine einseitige Materialanhäufung, welche auch als Abschrecklinse bezeichnet wird, unter dem Tragring erhält.

Der vorliegenden Erfindung liegt daher die Aufgabe zugrunde, die Gefahr des Entstehens derartiger Abschrecklinsen auszuschließen oder zumindest zu verringern. Dies wird erfindungsgemäß durch die beanspruchte Lösung nach den Ansprüchen 1 und 4 erreicht.

Erfindungsgemäß ist an dem Umfangsrand ein bezüglich der Blasform bzw. dem Umfangsrand nach innen ragendes Abstandshaltemittel vorgesehen, welches verhindert, dass der Körper des Behältnisses im Falle eines Verkippens des Behältnisses gegenüber der Blasform die Innenwandung der Blasform berührt.

Der Umfangsrand der Blasform ist Bestandteil eines Rings, an welchem die Flasche bzw. die Preform während des Blasvorgangs aufliegt. Genauer gesagt liegt der Kragen oder ein Umfangsrand der Flasche auf diesem Umfangsrand auf. Unter einem Abstützen des Behältnisses gegenüber der Blasform wird insbesondere verstanden, dass vor dem Blasvorgang das Behältnis und die Blasform nur an dem genannten Kragen des Behältnisses in Kontakt stehen und bevorzugter Weise keinerlei weitere Berührungspunkte zwischen dem Behältnis und der Innenwandung der Blasform auftreten.

Das Abstandshaltemittel ragt bezüglich einer von dem Ring gebildeten Öffnung nach innen.

Vorzugsweise ist das Abstandshaltemittel ringförmig ausgeführt, wobei es einen Abschnitt des Behältnisses vollständig umgibt. Dieses ringförmige Abstandshaltemittel ist dabei besonders bevorzugt einteilig mit dem Ring ausgebildet. Daneben wäre es jedoch auch denkbar, dass das Abstandshaltemittel eine Vielzahl von Vorsprüngen aufweist, die sich bezüglich der Blasform bzw. des Rings radial nach innen und in Richtung der Längsachse des Behältnisses erstrecken. Damit wird durch das Abstandshaltemittel der Durchmesser der durch den Ring gebildeten Öffnung verkleinert.

Vorzugsweise schließt das Abstandshaltemittel nach oben bündig mit dem Umfangsrand ab. Dies bedeutet, dass das Abstandshaltemittel insbesondere nicht nach oben aus dem Umfangsrand bzw. dem Ring hervorsteht und damit der Kragen des Behältnisses mit seiner Unterseite nicht bzw. nicht ausschließlich mit diesem Abstandshaltemittel in Berührung kommt. Außerdem schließt sich das Abstandshaltemittel bei dieser Ausführungsform nach unten direkt an den Umfangsrand an. Dies wird unter Bezugnahme auf die Figuren genauer erläutert.

Bei einer weiteren Ausführungsform weist das Abstandshaltemittel in seiner Umfangsrichtung einen rechteckigen Querschnitt auf. Zwar ist, wie erwähnt, das Abstandshaltemittel als Ring ausgeführt, dieser Ring wiederum weist jedoch in seiner Umfangsrichtung den besagten rechteckigen Querschnitt auf. Insbesondere wird der Übergang zwischen dem Abstandshaltemittel und dem Zentrierring bzw. der Blasform scharfkantig und gratfrei gewählt.

Vorzugsweise weist das Abstandshaltemittel in der Längsrichtung des Behältnisses eine Länge von 0,5 mm und 8 mm, bevorzugt zwischen 1 mm und 4 mm und bevorzugt zwischen 1,5 mm und 3 mm auf. Insbesondere eine Länge im Bereich von 2 mm hat sich als besonders vorteilhaft erwiesen, um einerseits ein Kippen des Behältnisses und damit die oben erwähnten Abschrecklinsen zu verhindern und andererseits den Herstellungsprozess der Behältnisse nicht übermäßig zu beeinträchtigen. Mit anderen Worten kann durch die Verengung dieses kurzen Bereiches unter dem Kragen des Behältnisses der Kippwinkel reduziert werden. Daneben wird auch erreicht, dass der Formkontakt in der (unmittelbaren) Nähe des Tragrings bzw. des Bereichs, in dem der Kragen des Behältnisses abgestützt wird, erfolgt. Dies ist unproblematisch, da das Kunststoffmaterial in diesen Bereichen noch kalt ist und damit nicht an dem Streckblasprozess teilnimmt.

Diese erfindungsgemäße Verengung des Bereichs unter dem Kragen bzw. das Abstandshaltemittel ist insbesondere bei solchen Blasformen vorteilhaft, die einen steilen Flaschenhals erzeugen, wie beispielsweise bei Konturflaschen.

Vorteilhaft sind damit sowohl der Umfangsrand als auch das Abstandshaltemittel an dem oben erwähnten Ring angeordnet.

Die vorliegende Erfindung ist auf einen Ring für eine Blasform der oben beschriebenen Art gerichtet, wobei dieser Ring einen ebenen Umfangsrand aufweist, auf dem ein Kragen eines zu behandelnden und insbesondere zu blasenden Behältnisses abstützbar ist.

Weiterhin ist ein zylindrischer Abschnitt vorgesehen, der sich im Wesentlichen senkrecht zu der Ebene des Umfangsrandes erstreckt. Erfindungsgemäß ist an dem zylindrischen Abschnitt ein sich bezüglich dieses zylindrischen Abschnittes radial nach innen erstreckendes Abstandhaltemittel vorgesehen. Vorzugsweise weist dieses Abstandshaltemittel einen kreisringförmigen Querschnitt auf.

Weitere Vorteile und Ausführungsformen ergeben sich aus den beigefügten Zeichnungen.

Darin zeigen:
- Fig. 1a -1c: drei Darstellungen zur Veranschaulichung der erfindungsgemäßen Idee;
- Fig. 2a: eine erste Ansicht eines herzustellenden Behältnisses;
- Fig. 2b: eine Draufsicht auf das Behältnis aus Fig. 2a entlang der Linien A-A aus Fig. 2a;
- Fig. 2c: eine Draufsicht auf einen oberen Bereich des Behältnisses aus Fig. 2a;
- Fig. 2d: eine Detailansicht des Details C aus Fig. 2a;
- Fig. 3a: eine Draufsicht auf eine erfindungsgemäße Ringhälfte;
- Fig. 3b: eine Schrägansicht der Ringhälfte aus Fig. 3a;
- Fig. 3c: eine Seitenansicht der Ringhälfte aus Fig. 3a; und
- Fig. 3d: eine Detailansicht des Details A aus Fig. 3c.

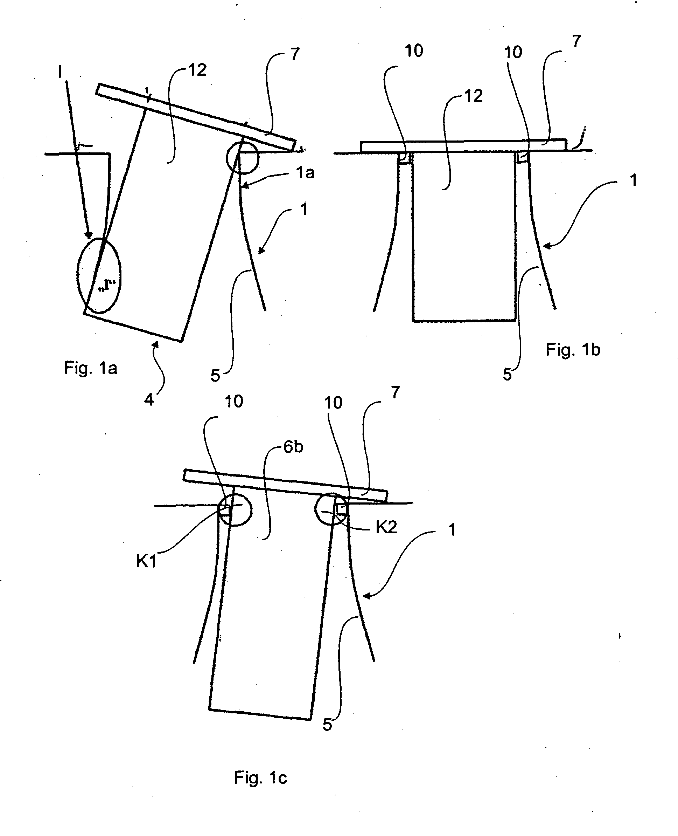

Fig. 1a zeigt einen Teil eines Behältnisses 4 in einer Blasform 1 nach dem Stand der Technik. Dabei sind von dem Behältnis lediglich ein Kragen 7 sowie ein kurzer Abschnitt des Flaschenhalses bzw. Halsbereichs 12 des Behältnisses 4 dargestellt. Oberhalb des Kragens 7 schließt sich ein (nicht gezeigtes) Flaschengewinde an und unterhalb des Halsbereiches 12 der (nicht gezeigte) Bauch der Flasche. Ebenso ist nur ein Teil der Blasform 1 nach dem Stand der Technik gezeigt. Wie in Fig. 1a dargestellt, besteht ein relativ großes Spiel zwischen dem Behältnis 4 bzw. dem Halsbereich 12 des Behältnisses 4 und dem Hals 1a der Blasform 1. Falls es nun zu den in Fig. 1a gezeigten Kippen des Behältnisses 4 gegenüber der Blasform 1 kommt, kann ein einseitiger Formkontakt zwischen dem Behältnis 4 und der Blasform 1 genauer gesagt zwischen dem Halsbereich 1a der Blasform 1 und dem Halsbereich 12 des Behältnisses 4 auftreten. Dies ist durch das Bezugszeichen I veranschaulicht.

Da die Blasform 1 bzw. deren Innenwandung 5 im Vergleich zu dem Behältnis 4 kühler ist, kühlt sich das Behältnis 4 in dem mit I gekennzeichneten Bereich ab. Dies führt dazu, dass das Behältnis 4 nach dem Streck-Blas-Vorgang eine einseitige Materialanhäufung (Abschrecklinse) unter dem Kragen 7 aufweist.

Fig. 1b zeigt schematisch eine erfindungsgemäße Blasform 1. Diese erfindungsgemäße Blasform 1 weist zusätzlich ein Abstandshaltemittel 10 auf. Dieses Abstandshaltemittel 10 verringert den Formspalt zwischen dem Behältnis 4 und der Blasform 1 bzw. dem Halsbereich 12 des Behältnisses 4 und dem Halsbereich 1a der Blasform 1. Im Falle eines Kippens des Behältnisses 4 gegenüber der Blasform 1 verhindert, wie in Fig. 1c gezeigt, das Abstandhaltemittel 10, dass das Behältnis 4 die Blasform 1 berührt. Zwar tritt in diesem Fall ein Kontakt zwischen dem Abstandshaltemittel 10 und dem Bereich des Behältnisses 4 direkt unterhalb des Kragens 7 auf, wie durch die beiden Kreise K1 und K2 veranschaulicht ist. Dieser Kontakt ist jedoch unproblematisch, da das Kunststoffmaterial in diesem Bereich relativ kalt ist und nicht bzw. nur sehr wenig am Streck-Blas-Prozess teilnimmt. Dabei ist zu beachten, dass die Erwärmung des Behältnisses 4 idealer weise auf den Bereich unterhalb des Kragens 7 begrenzt ist und die die Preform in dem Bereich oberhalb des Kragens 7 bereits vor dem Streck-Blas-Vorgang ihre endgültige Form besitzt. Damit wird insgesamt eine Verengung unter dem Kragen 7 bzw. dem in Fig. 1c nicht im Detail gezeigten Ring der Blasform 1 vorgeschlagen. Damit kann durch die erfindungsgemäße Verengung das Entstehen der oben erwähnten Abschrecklinsen verhindert werden.

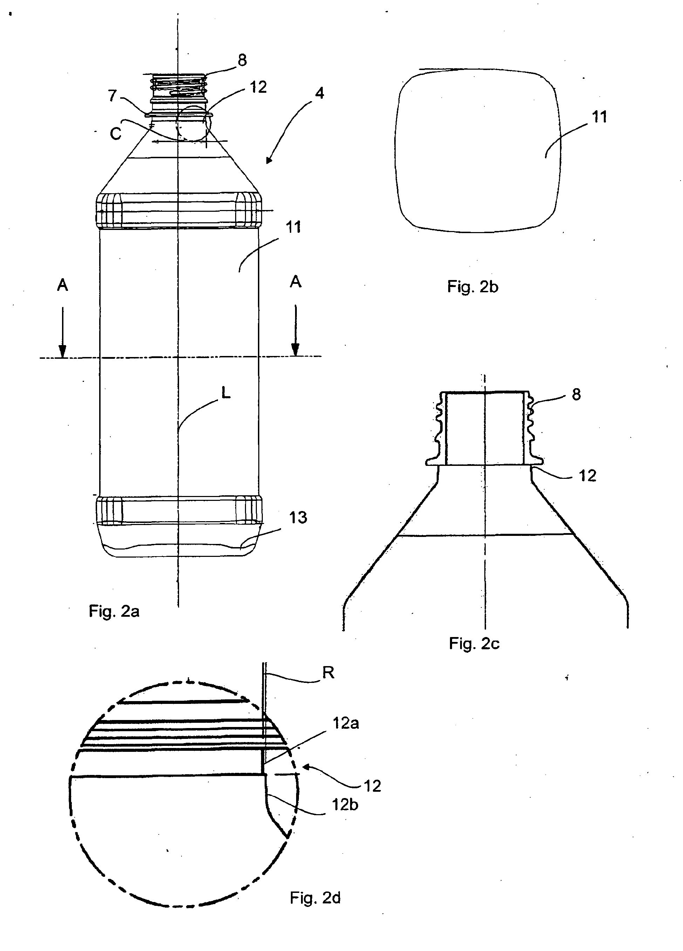

Fig. 2a zeigt ein Beispiel für ein aufzublasendes Kunststoffbehältnis 4. Dieses Kunststoffbehältnis 4 weist den bereits in Fig. 1a und 1c gezeigten Kragen 7 auf, der sich gegenüber der Blasform 1 abstützt. Direkt unter dem Kragen 7 ist der Halsbereich 12 vorgesehen, der wiederum über einen schrägen Bereich in einen Körper 11 des Behältnisses 4 mündet. Das Bezugszeichen 13 bezieht sich auf einen Boden des Behältnisses 4 und das Bezugszeichen 8 auf ein Gewinde. Fig. 2b zeigt eine Draufsicht auf das Verhältnis aus Fig. 2a entlang der Linien A-A aus Fig. 2a. Man erkennt, dass das Behältnis 4 in diesem Falle eine rechteckige Form mit abgerundeten Ecken aufweist. Die Erfindung ist jedoch nicht auf diese Querschnitte beschränkt. Das Bezugszeichen L kennzeichnet die Längsrichtung des Behältnisses.

Fig. 2c zeigt eine Teilansicht eines fertiggestellten Behältnisses 4, welches mit einer erfindungsgemäßen Blasform 1 hergestellt wurde.

Fig. 2d zeigt eine Detaildarstellung des Bereiches C aus Fig. 2a. Man erkennt, dass durch das Abstandhaltemittel 10 ein radial verengter Bereich 12a des Halsbereiches 12 entstanden ist. Daneben ist ein radial unveränderter Bereich 12b vorhanden. Der radiale Abstand R zwischen den Bereichen 12a und 12b ergibt sich, wie unten gezeigt wird, aus der radialen Breite des Abstandshaltemittels 10.

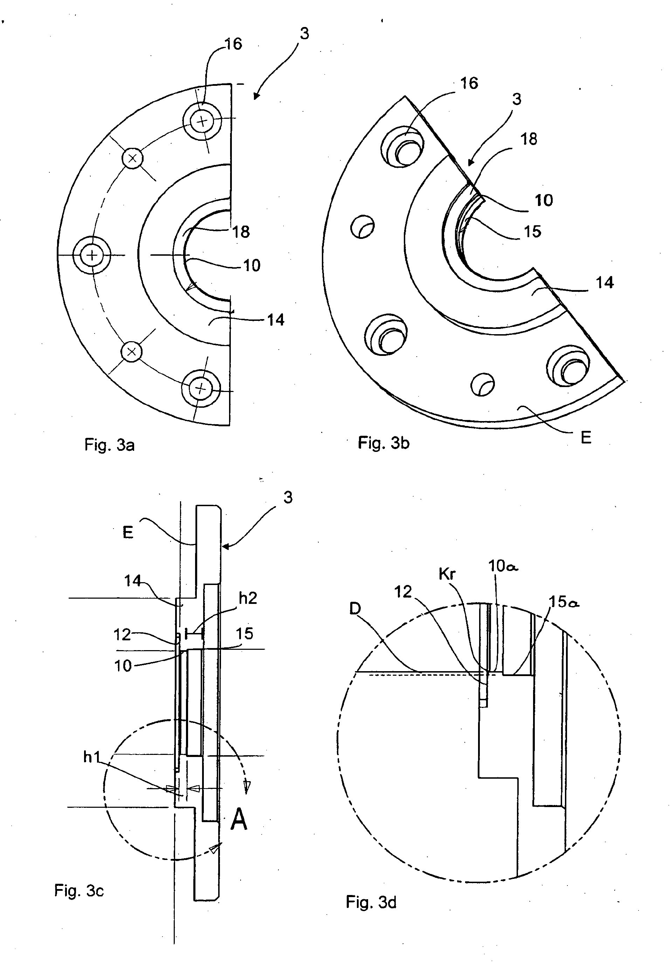

Fig. 3a zeigt eine Hälfte eines erfindungsgemäßen Rings 3, der an dem oberen Ende der in Figuren 1a - 1c nur schematisch dargestellten Blasform 1 angeordnet ist. Dabei kann dieser Ring 3 an der Blasform 1 angeschraubt werden. Zu diesem Zweck weist der Ring 3 Bohrungen 16 auf. Damit kann der Ring 3 von der jeweiligen Blasform getrennt und beispielsweise durch einen anderen Ring 3 mit anderen Durchmessern ersetzt werden.

Das Bezugszeichen 18 bezieht sich auf einen Umfangsrand des Rings 3, auf dem sich der Kragen 7 (vgl. Figuren 2a - 2c) des Behältnisses 4 abstützt. Das Bezugszeichen 10 kennzeichnet das Abstandshaltemittel. Das Bezugszeichen 14 bezieht sich auf einen gegenüber der Ebene E des Rings 3 erhabenen Bereich. Der erhabene Bereich 14 dient zur Erzeugung eines in Fig. 3b gezeigten zylindrischen Abschnitts 15, der sich unmittelbar an das Abstandshaltemittel 10 anschließt.

Der Ring 3 kann als einteiliges Werkstück hergestellt werden. Das erfindungsgemäße Abstandshaltemittel 10 ist an dem oberen Bereich, d. h. den dem Kragen 7 des Behältnisses 4 zugewandten Bereich dieses zylindrischen Abschnitts 15 angeordnet. Dieses Abstandshaltemittel 10 behindert ein Schließen der Blasform 1 nicht.

Fig. 3c zeigt eine Seitenansicht eines erfindungsgemäßen Rings 3. Man erkennt auch hier wieder den erhabenen Bereich 14, der sich gegenüber der Ebene E bzw. der Basis des Rings 3 absetzt. Ebenfalls ist der zylindrische Abschnitt 15 zu erkennen, in dem während des Streckblas-Vorgangs der Bereich 12 des Behältnisses liegt. Man erkennt, dass die Höhe h1 des Abstandshaltemittels geringer ist als die Höhe h2 des darunter liegenden zylindrischen Abschnitts. Die Höhe h1 liegt in einem Bereich zwischen 1 mm und 3 mm und bevorzugt zwischen 1,5 mm und 2,5 mm.

Fig. 3d zeigt eine Detaildarstellung des Bereichs A aus Fig. 3c. Dabei bezieht sich das Bezugszeichen D auf den Abstand der Wandung 10a des Abstandshaltemittels 10 gegenüber der Wandung 15a des zylindrischen Abschnitts. Dieser Abstand D liegt in einem Bereich zwischen 0,2 mm und 1,2 mm bevorzugt zwischen 0,4 mm und 1 mm und besonders bevorzugt im Bereich von 0,8 mm.

Dieser Abstand D führt, wie oben gesagt, zu dem radialen Abstand R in Fig. 2. Diese Wahl des Bereiches hat sich als besonders günstig erwiesen, um einerseits die Eingangs erwähnten Abschrecklinsen zu verhindern und um andererseits die Herstellung der Behältnisse 4 nicht übermäßig zu behindern. Wie insbesondere aus Fig. 3d ersichtlich, ist der Übergang zwischen dem Abstandshaltemittel 10 und dem zylindrischen Abschnitt 15 scharfkantig und bevorzugt auch gratfrei. Durch diesen schafkantigen Übergang kann in besonders vorteilhafter Weise das Eingangs erwähnte Kippen des Behältnisses 4 gegenüber der Blasform 1 verhindert werden.

Der Krümmungsradius Kr liegt in einem Bereich zwischen 0,2 mm und 0,4 mm und bevorzugt in einem Bereich zwischen 0,25 mm und 0,35 mm. Es wird darauf hingewiesen, dass die genauen Dimensionen des Abstandshaltemittels 10 bzw. auch des zylindrischen Abschnitts 15 in Folge umfangreicher Untersuchungen und Experimente ermittelt wurden und dabei insbesondere auch weitere Prozessparameter wie beispielsweise die Temperatur des Behältnisses 4 berücksichtigt werden mussten.

## Patentansprüche

1. Ring (3) für eine Blasform (1) mit einem ebenen Umfangsrand (18) auf dem ein Kragen (7) eines zu behandelnden Behältnisses (4) abstützbar ist und mit einem zylindrischen Abschnitt (15), der sich senkrecht zu der Ebene des Umfangsrandes (18) erstreckt,
- wobei an dem zylindrischen Abschnitt (15) ein bezüglich des zylindrischen Abschnitts (15) radial nach innen ragendes Abstandshaltemittel (10) vorgesehen ist,
- wobei das Abstandshaltemittel (10) einen Formspalt zwischen dem zu behandelnden Behältnis (4) und einem Halsbereich (1 a) der Blasform (1) verringern **kann** und durch das Abstandshaltemittel (10) ein radial verengter Bereich (12a) eines Halsbereichs (12) des zu behandelnden Behältnisses (4) herstellbar ist,
**dadurch gekennzeichnet, dass**
- ein Abstand (D) zwischen einer Wandung (10a) des Abstandhaltemittels (10) gegenüber einer Wandung (15a) des zylindrischen Abschnitts (15) in einem **Bereich zwischen 0,2 und 1,2 mm liegt**.

2. Ring (3) nach Anspruch 1, **dadurch gekennzeichnet dass** das Abstandshaltemittel (10) einen kreisringförmigen Querschnitt aufweist.

3. **Blasform (1) mit einem Ring (3) nach Anspruch** 1.

4. Verfahren zur Herstellung von Kunststoffbehältnissen (4), mit einer Blasform, mit einem Grundkörper, in dessen Innerem ein Körper (4a) des zu behandelnden Behältnisses (4) aufgenommen wird und von dessen Innenwandung (5) das zu behandelnde Behältnis (4) vollständig umgeben wird,
**dadurch gekennzeichnet, dass**
- die Blasform (1) einen Ring (3) **nach Anspruch 1** zur Abstützung eines Halses des zu behandelnden Behältnisses (4) gegenüber der Blasform (1), aufweist,
- **wobei** ein an dem Ring (3) vorgesehenes, bezüglich eines Umfangrandes (18) des Ringes (3) nach innen ragendes, Abstandshaltemittel (10) verhindert, dass der Körper des zu behandelnden Behältnisses (4) im Falle eines Verkippens des zu behandelnden Behältnisses (4) gegenüber der Blasform (1) die Innenwandung (5) der Blasform (1) berührt,
- wobei durch das Abstandshaltemittel (10) ein Formspalt zwischen dem zu behandelnden Behältnis (4) und einem Halsbereich (1a) der Blasform (1) verringert wird und durch das Abstandshaltemittel (10) ein radial verengter Bereich (12a) eines Halsbereichs (12a) des zu behandelnden Behältnisses (4) entsteht.

## Claims

1. A ring (3) for a blow mould (1) with a flat peripheral edge (18) on which a collar (7) of a container (4) to be treated is capable of being supported, and with a cylindrical portion (15) which extends at a right angle to the plane of the peripheral edge (18),
- wherein a spacer means (10) projecting radially towards the inside with respect to the cylindrical portion (15) is provided on the cylindrical portion (15),
- wherein the spacer means (10) can reduce a moulding gap between the container (4) to be treated and a neck region (1 a) of the blow mould (1), and a radially constricted region (12a) of a neck region (12) of the container (4) to be treated is capable of being produced by the spacer means (10),
**characterized in that**
- a distance (D) between a wall (10a) of the spacer means (10) with respect to a wall (15a) of the cylindrical portion (15) is present in a range of between 0.2 and 1.2 mm.

2. A ring (3) according to claim 1, **characterized in that** the spacer means (10) has an annular cross-section.

3. A blow mould (1) with a ring (3) according to claim 1.

4. A method of producing plastics material containers (4), with a blow mould, with a main body, in the interior of which a body (4a) of the container (4) to be treated is received and by the inner wall (5) of which the container (4) to be treated is completely surrounded,
**characterized in that**
- the blow mould (1) has a ring (3) according to claim 1 for supporting a neck of the container (4) to be treated with respect to the blow mould (1),
- wherein a spacer means (10), which is provided on the ring (3) and which projects towards the inside with respect to a peripheral edge (18) of the ring (3), prevents the body of the container (4) to be treated from touching the inner wall (5) of the blow mould (1) in the event that the container (4) to be treated tilts with respect to the blow mould (1),
- wherein a moulding gap between the container (4) to be treated and a neck region (1 a) of the blow mould (1) is reduced by the spacer means (10), and a radially constricted region (12a) of a neck region (12) of the container (4) to be treated occurs as a result of the spacer means (10).

## Revendications

1. Bague (3) pour un moule de soufflage (1) avec un bord périphérique (18) plan sur lequel peut s'appuyer un col (7) d'un récipient à traiter (4), et avec un segment cylindrique (15) qui s'étend perpendiculairement au plan du bord périphérique (18),
- un moyen d'espacement (10) saillant radialement du segment cylindrique (15) vers l'intérieur étant prévu contre le segment cylindrique (15),
- le moyen d'espacement (10) pouvant réduire un interstice de formage entre le récipient à traiter (4) et une zone de col (1a) du moule de soufflage (1), et une zone radialement rétrécie (12a) d'une zone de col (12) du récipient à traiter (4) pouvant être obtenue par le moyen d'espacement (10),
**caractérisée en ce qu'**
- un espacement (D) entre une paroi (10a) du moyen d'espacement (10) et une paroi (15a) du segment cylindrique (15) est compris entre 0,2 et 1,2 mm.

2. Bague (3) selon la revendication 1, **caractérisée en ce que** le moyen d'espacement (10) présente une section transversale en forme d'anneau de cercle.

3. Moule de soufflage (1) avec une bague (3) selon la revendication 1.

4. Procédé de fabrication de récipients en matière plastique (4) avec un moule de soufflage, avec un corps de base à l'intérieur duquel est logé un corps (4a) du récipient à traiter (4) et dont la paroi intérieure (5) entoure complètement le récipient à traiter (4),
**caractérisé en ce que**
- le moule de soufflage (1) comporte une bague (3) selon la revendication 1, pour l'appui d'un col du récipient à traiter (4) par rapport au moule de soufflage (1),
- un moyen d'espacement (10) prévu contre la bague (3), saillant vers l'intérieur par rapport à un bord périphérique (18) de la bague (3), empêchant que le corps du récipient à traiter (4) entre en contact avec la paroi intérieure (5) du moule de soufflage (1) en cas de pivotement du récipient à traiter (4) par rapport au moule de soufflage (1),
- un interstice de formage entre le récipient à traiter (4) et une zone de col (1a) du moule de soufflage (1) étant réduit par le moyen d'espacement (10), et une zone radialement rétrécie (12a) d'une zone de col (12) du récipient à traiter (4) étant obtenue par le moyen d'espacement (10).
